# EUROPEAN PATENT APPLICATION

(11) **EP 2 911 022 A2**
(43) Date of publication of application: **26.08.2015**
(21) Application number: 15150738.1
(22) Date of filing: 12.01.2015
(51) Int. Cl.: G05B 19/05

(54) **LADDER PROGRAM GENERATING DEVICE**

(30) Priority: 19.02.2014 JP 2014030089
(71) Applicant: Kabushiki Kaisha Yaskawa Denki, Kitakyushu-shi, Fukuoka 806-0004 (JP)
(72) Inventor: Shiromoto, Naoki, Kitakyushu-shi, Fukuoka 806-0004 (JP); Handa, Hiroyuki, Kitakyushu-shi, Fukuoka 806-0004 (JP)
(74) Representative: Viering, Jentschura & Partner Patent- und Rechtsanwälte

(57) **Abstract**

A ladder program generating device (1) includes: a ladder chart display unit (2) configured to display a ladder chart including a plurality of program elements; a variable specification unit (3) configured to identify one program element included in the ladder chart and specify a variable included in the one program element; a program element search unit (4) configured to search the program element including the variable specified by the variable specification unit (3) inside the ladder chart; a search result display unit (6) configured to display a list of program elements searched by the program element search unit (4) as a search result; a search result storage unit (5) configured to at least store a search history by the program element search unit (4); and a search result selection unit (7) configured to select the search result to be displayed next by the search result display unit (6) based on the search history. In this device, debug operations can be easily performed in generation of the ladder program and generation efficiency of the ladder program can be enhanced.

## Description

### BACKGROUND

### 1. Technical Field

Embodiments of this disclosure relate to a ladder program generating device, a computer program, and a computer-readable information recording medium.

### 2. Description of the Related Art

JP-A-2006-146955 discloses a development supporting apparatus for user programs. In this apparatus, corresponding to a component (an instruction) selected in a ladder program and displayed in a ladder display, information displayed in a cross-reference information display is each time generated and is displayed in the cross-reference information display. Furthermore, in this apparatus, a bookmark button, a retreat button, and an advance button are prepared at the upper side of the cross-reference information display. Every time the retreat button is selected and executed, one step previously displayed (stored) cross-reference information with respect to currently displayed cross-reference information is called and displayed. On the other hand, when the advance button is clicked, the cross-reference information to be displayed (stored) next with respect to the currently displayed cross-reference information is called and displayed.

One of concerns to be solved in an embodiment of this disclosure is that debug operations are easily performed in generation of the ladder program and thereby generation efficiency of the ladder program is enhanced.

### SUMMARY

A ladder program generating device according to an aspect of the present disclosure includes: a ladder chart display unit configured to display a ladder chart including a plurality of program elements; a variable specification unit configured to identify one program element included in the ladder chart and specify a variable included in the one program element; a program element search unit configured to search the program element including the variable specified by the variable specification unit inside the ladder chart; a search result display unit configured to display a list of program elements searched by the program element search unit as a search result; a search result storage unit configured to at least store a search history by the program element search unit; and a search result selection unit configured to select the search result to be displayed next by the search result display unit based on the search history.

In addition, in the ladder program generating device according to the aspect of the present disclosure, the search result display unit may display the program element identified by the variable specification unit by distinguishing from another program element included in the search result.

Moreover, in the ladder program generating device according to the aspect of the present disclosure, when the search result display unit displays a search result, the ladder chart display unit may display the program element identified by the variable specification unit by distinguishing from another program element included in the search result.

Furthermore, the ladder program generating device according to the aspect of the present disclosure may further include a program element selection unit configured to select one program element included in the search result displayed by the search result display unit and cause the ladder chart display unit to display at least the one program element.

Furthermore, in the ladder program generating device according to the aspect of the present disclosure, the search result selection unit may include a display advance/retreat selection unit configured to advance or retreat a display at least any one of the ladder chart display unit and the search result display unit based on the search history.

Furthermore, in the ladder program generating device according to the aspect of the present disclosure, when the search result can be advanced or retreated, the display advance/retreat selection unit may advance or retreat the display by the ladder chart display unit and the search result display unit, and when the search result cannot be advanced or retreated, the display advance/retreat selection unit may advance or retreat the display by the ladder chart display unit.

Furthermore, in the ladder program generating device according to the aspect of the present disclosure, the display advance/retreat selection unit may alternately advance or retreat the display by the ladder chart display unit and the search result display unit.

Furthermore, in the ladder program generating device according to the aspect of the present disclosure may further include:
a selection result storage unit configured to store a selection result as presence or absence of a selection by the program element selection unit for each of the program elements included in the search result; a selection result display unit configured to display the selection result associating with the program elements included in the search result; and a selection result change unit configured to change the selection result.

Furthermore, in the ladder program generating device according to the aspect of the present disclosure, the selection result change unit may have a function to change the selection result from being selected to not being selected, and from not being selected to being selected.

Furthermore, the ladder program generating device according to the aspect of the present disclosure may further include a search history display unit configured to display a list of searches included in the search history. The search result selection unit may be configured to select the search result by one search selected from the listed searches as the search result to be displayed next by the search result display unit.

Furthermore, in the ladder program generating device according to the aspect of the present disclosure, the search history display unit, among the listed searches, may display the search where all of the program elements included in the search result obtained by the search are displayed by the ladder chart display unit by distinguishing from another search.

Furthermore, in the ladder program generating device according to the aspect of the present disclosure, the search history display unit may be configured to display the search history including the search performed before the search result displayed by the search result display unit and the search performed after the displayed search result.

Furthermore, in the ladder program generating device according to the aspect of the present disclosure, the search history display unit may display the search included in the search history by the program element search unit as a breadcrumb trail.

Furthermore, in the ladder program generating device according to the aspect of the present disclosure, the program element search unit may be configured to selectively search a program element (such as a coil) to be a writing target of a variable as a search target included in the ladder chart.

A computer program according to an aspect of the present disclosure causes a computer to function as a ladder program generating device. The ladder program generating device includes: a ladder chart display unit configured to display a ladder chart including a plurality of program elements; a variable specification unit configured to identify one program element included in the ladder chart and specify a variable included in the one program element; a program element search unit configured to search the program element including the variable specified by the variable specification unit inside the ladder chart; a search result display unit configured to display a list of program elements searched by the program element search unit as a search result; a search result storage unit configured to at least store a search history by the program element search unit; and a search result selection unit configured to select the search result to be displayed next by the search result display unit based on the search history.

In a computer-readable information recording medium according to an aspect of the present disclosure, the computer program is recorded.

### BRIEF DESCRIPTION OF THE DRAWINGS

Fig. 1 is a block diagram illustrating a physical exemplary configuration of a ladder program generating device according to an embodiment of this disclosure;
Fig. 2 is a functional block diagram illustrating a functional exemplary configuration of the ladder program generating device according to the embodiment of this disclosure;
Fig. 3 is a diagram illustrating one example of a display screen of a monitor of the ladder program generating device;
Fig. 4 is the diagram illustrating the one example of the display screen of the monitor of the ladder program generating device;
Fig. 5 is the diagram illustrating the one example of the display screen of the monitor of the ladder program generating device;
Fig. 6 is the diagram illustrating the one example of the display screen of the monitor of the ladder program generating device;
Fig. 7 is the diagram illustrating the one example of the display screen of the monitor of the ladder program generating device;
Fig. 8 is the diagram illustrating the one example of the display screen of the monitor of the ladder program generating device;
Fig. 9 is the diagram illustrating the one example of the display screen of the monitor of the ladder program generating device;
Fig. 10 is the diagram illustrating the one example of the display screen of the monitor of the ladder program generating device;
Fig. 11 is a diagram illustrating a transition of a ladder chart display area and a search result display area in the screens illustrated in Fig. 3 to Fig. 9;
Fig. 12 is the diagram illustrating the transition of the ladder chart display area and the search result display area in the screens illustrated in Fig. 3 to Fig. 9;
Fig. 13 is the diagram illustrating the transition of the ladder chart display area and the search result display area in the screens illustrated in Fig. 3 to Fig. 9; and
Fig. 14 is a flowchart illustrating an operation by a search result selector.

### DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

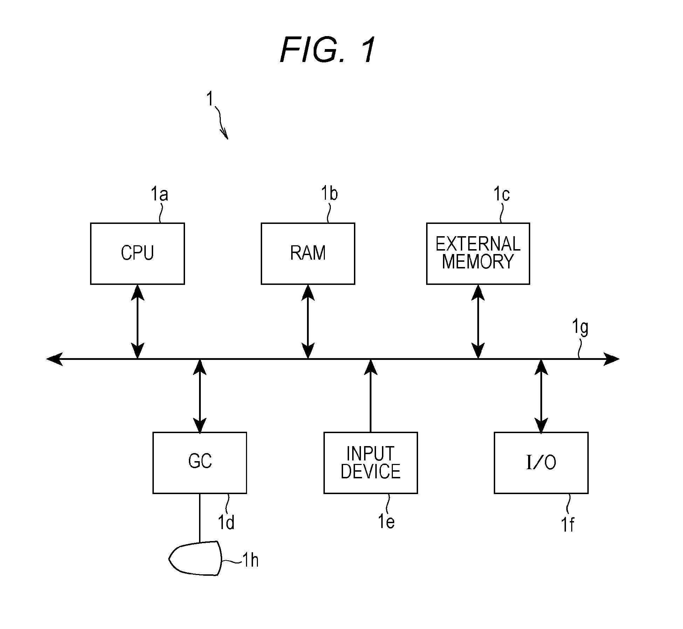

Fig. 1 is a block diagram illustrating a physical exemplary configuration of a ladder program generating device 1 according to an embodiment of this disclosure. A general computer may be employed as the ladder program generating device 1. The ladder program generating device 1 in this embodiment may be also a general computer. Namely, in the ladder program generating device 1, a central processing unit (CPU) 1a, a random access memory (RAM) 1b, an external memory 1c, a graphics controller (GC) 1d, an input device 1e, and an input/ output (I/O) 1f are coupled via a data bus 1g so as to be able to mutually exchange an electrical signal.

Here, the external memory 1c is a device, such as a hard disk drive (HDD) and a solid state drive (SSD), recordable of information statically. Further, a signal from the GC 1d is output to a monitor 1h and displayed as an image. The monitor 1h includes a cathode ray tube (CRT) and a so-called flat panel display. A user visually recognizes the image by the monitor 1h. The input device 1e is equipment, such as a keyboard, a computer mouse, and a touchscreen, with which the user input information. The I/O 1f is an interface through which the ladder program generating device 1 exchanges information with external equipment. Application programs causing the computer to function as the ladder program generating device 1 are installed in the external memory 1c, are read out as necessary to the RAM 1b, and are executed by the CPU 1a. In addition, the programs may be recorded to an appropriate non-transient computer-readable information recording medium such as an optical disk, a magneto-optical disk, and a flash memory and be provided. Alternatively, the programs may be provided via information communication line such as the Internet. Further, ladder programs generated by the ladder program generating device 1 may be transferred to a programmable logic controller (PLC) coupled via I/O 1f and executed.

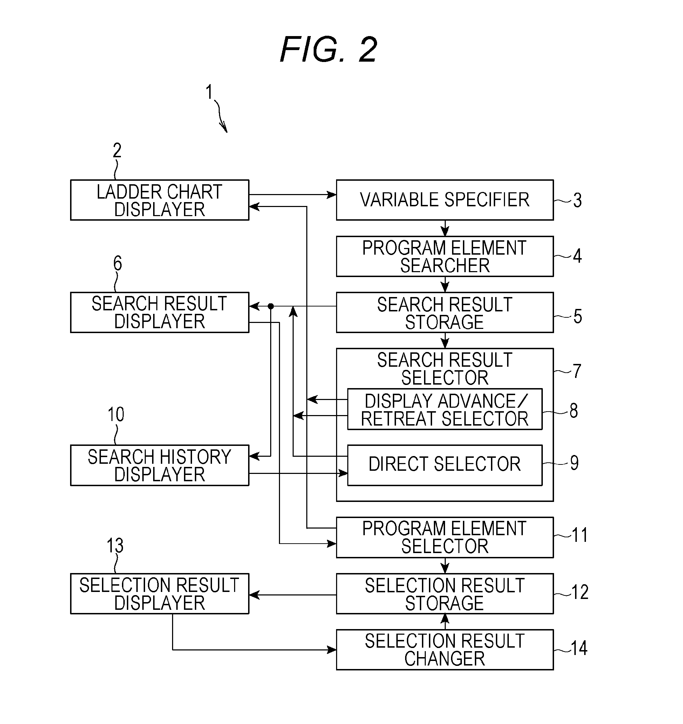

Fig. 2 is a functional block diagram illustrating a functional exemplary configuration of the ladder program generating device 1 according to the embodiment of this disclosure. The respective functional blocks illustrated in this diagram is virtually achieved with the use of aforementioned physical configuration of the ladder program generating device 1, for example, by predetermined programs being executed by the CPU 1a and by a storage area for predetermined information being assigned to the RAM 1b or the external memory 1c. That is, this diagram is focused on the functions the ladder program generating device 1 has, and these functions are individually indicated. Accordingly, the functional blocks illustrated in this diagram do not necessarily mean that the physical configuration of the ladder program generating device 1 or the program itself executed by the ladder program generating device 1 is divided into the respective functional blocks. Furthermore, in this diagram, all functions ladder program generating device 1 has are not illustrated. In this diagram, a portion that has low technical relation with the embodiment of this disclosure is omitted.

A ladder chart displayer 2 displays a ladder chart with a plurality of program elements on the monitor 1h. Here, the program element means an individual instruction configuring the ladder program, and is displayed as graphics indicating a contact point, a timer, a coil, a branch and a similar component on the monitor 1h.

A variable specifier 3 identifies one program element in the ladder chart, and specifies a variable included in the one program element. For example, the variable specifier 3 identifies the program element selected by a user based on the information being input by the user via the ladder chart or a similar chart and specifies the variable included in the program element. Here, the variable means a register associated with the program element. For example, when the program element is a contact point, the variable is an area indicating a state of the contact point denoted by a contact point number that the contact point refers. Additionally, the variable specifier 3 may be configured to be able to be specified not only on the ladder chart, but also, for example, directly by the user inputting the contact point number as a number for distinguishing the variable or a similar method.

A program element searcher 4 searches the program element including the variable specified by the variable specifier 3. For example, when a variable is an area that indicates a state of a contact point denoted by a contact point number, the program element referring the contact point number is searched in the ladder program. Here, a list of extracted program elements is obtained as search result. The search result is specifically a group of instruction numbers indicating the program elements.

A search result storage 5 stores a search history obtained by the program element searcher 4. Here, when a repetition search is performed, the search result storage 5 stores the search result so as to be able to identify an order of the search. For that reason, the search result storage 5 in this embodiment stores the search result obtained by the program element searcher 4 together with the history. Instead of this, the search result storage 5 may selectively store the search history (for example, the variable having been a search target) so as to be able to identify the order. In this case, the search result may be obtained by the program element searcher 4 performing a re-search. In addition, here, the term "search" is handled not only as the meaning of an act of finding out information matching a search target among other information but also as the meaning of the information identifying the act. In the aforementioned example, the variable having been the search target is a search because the variable is the information identifying the search as the act using the variable.

A search result displayer 6 displays the search result, that is, a list of program elements obtained as the result of the search by the program element searcher 4 on the monitor 1h.

A search result selector 7 can select a search result to be displayed next by the search result displayer 6 based on the search history. That is, in this embodiment, by selection of the search result stored in the search result storage 5 in some way, the search result selector 7 causes the search result displayer 6 to display the at least search result. As a method of this selection, various kinds of method may be considered. In this embodiment, two methods are possible as follows: a method to select advance or retreat of the display of either or both of the ladder chart displayer 2 and the search result displayer 6, and a method to display the history of the search result and directly select the search result among the history. In the respective methods, the selection is performed by a display advance/retreat selector 8 or a direct selector 9 as the function block. Namely, the display advance/retreat selector 8 and the direct selector 9 are part of the function of the search result selector 7. The detail operation of the display advance/retreat selector 8 and the direct selector 9 will be described later.

A search history displayer 10 displays the list of the history of the search by the program element searcher 4. In this embodiment, as described later, the search history displayer 10 displays the list of the search history as a breadcrumb trail.

By selecting one program element included in the search result displayed by the search result displayer 6, a program element selector 11 causes the ladder chart displayer 2 to display at least the one program element. Specifically, the program element selector 11 controls the ladder chart displayer 2 in order that a row of the ladder chart including the selected program element is displayed on the monitor 1h.

Further, a selection result storage 12 stores the selection result, namely the presence or absence of the selection by the program element selector 11. Additionally, the selection result stored in the selection result storage 12 are displayed on the monitor 1h by a selection result displayer 13 in the format recognizable of the correspondence with the program element included in the search result being displayed by the search result displayer 6.

A selection result changer 14 changes the displayed selection result (the presence or absence of the selection) by the selection result displayed by the selection result displayer 13 being selected, for example, by a user. Specifically, the selection result changer 14 can perform the operation of changing the program element in the state of being non-selected to the state of being selected and the reverse operation. The changed selection result is stored in the selection result storage 12.

The following describes the operation of the ladder program generating device 1 having the aforementioned configuration with reference to the screen displayed on the monitor 1h.

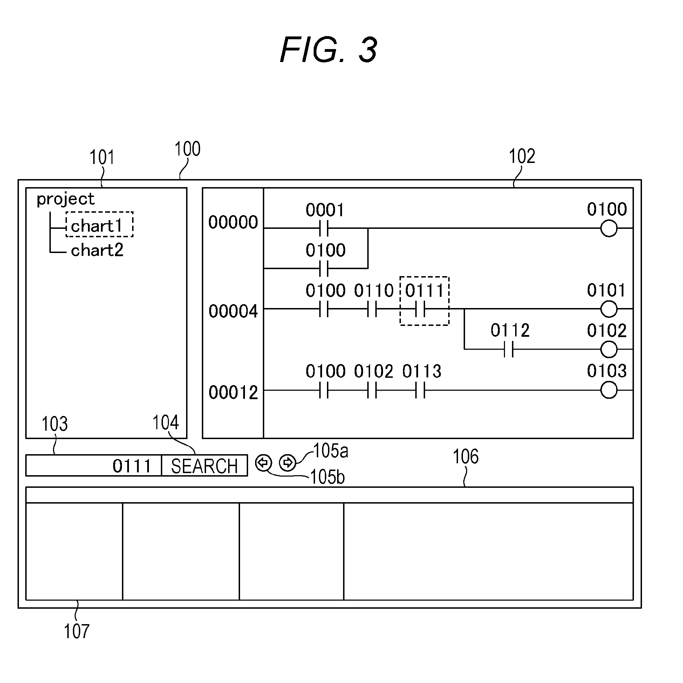

Fig. 3 is a diagram illustrating one example of the display screen of the monitor 1h of the ladder program generating device 1. A display screen 100 includes a project information display area 101, a ladder chart display area 102, a search target input box 103, a search button 104, an advance button 105a, a retreat button 105b, a search history display area 106, and a search result display area 107.

In the project information display area 101, the information on a project to be edited is displayed. In the example of this diagram, it is indicated that two ladder charts belong to the project currently being edited, and the respective ladder charts are labeled as "chart 1" and "chart 2." Further, the ladder chart displayed in the ladder chart display area 102 to be described next and being edited is the ladder chart "chart 1." In view of this, in the project information display area 101, the ladder chart "chart 1" is highlighted by a highlight display or a similar highlighting (in Fig. 3, the surrounding by a dashed line indicates the highlighting). Additionally, "highlighting" in this description means that an element is displayed so as to be able to be distinguished from other same type of element.

In the ladder chart display area 102, the ladder chart being edited is displayed by the ladder chart displayer 2. In the drawing, the five digits number at the left end of the row of the ladder chart is the instruction number, and indicates the instruction number of the program element at the left end of the row. Further, the four digits number indicated on each program element is the number to distinguish the variable, and is the contact point number here.

The search target input box 103 is the area where the contact point number to be searched is displayed. The user can directly input the contact point number in the search target input box 103.

The search button 104 is the button selected when the program element which includes the variable having the contact point number being input in the search target input box 103, that is, the program element associated with the variable is searched. In addition, the button is a virtual button displayed on the monitor 1h. In view of this, the selection of the button is performed as follows: the user moves a pointer, such as a computer mouse cursor, on the button and clicks, or when a touchscreen is employed as the input device 1e, the user touches the area where the button on the monitor 1h is displayed, or a similar method.

The advance button 105 a is the button selected, during the browsing of the search result already having been searched, for advancing the result by one step. The retreat button 105b is the button selected for retreating the search result by one step.

The search history display area 106 is the area where the search history is displayed.

In the search result display area 107, the search result is displayed.

First, in the state in Fig. 3, assume when, for example, for debug of the program, the portion which determines the state of the contact point displayed in near the center of the ladder chart display area 102 is traced by the search.

Here, first, the contact point being problem is selected. In addition, this selection is performed, for example, as follows: the user moves a pointer, such as a computer mouse cursor, on the contact point displayed in the ladder chart display area 102 and clicks, or when a touchscreen is employed as the input device 1e, the user touches the area where the contact point is displayed, or a similar method. Accordingly, by the variable specifier 3, the variable included in the contact point is specified by the contact point number ("0111"). The contact point being the selected program element is highlighted by a highlight display or a similar highlighting by the ladder chart displayer 2 (in Fig. 3, the surrounding by a dashed line indicates the highlighting). Accordingly, the program element being the search source, that is, the selected program element can be easily identified from inside the ladder chart. Further, the contact point number "0111" of the specified variable becomes the state being input in the search target input box 103.

When the search button 104 is selected (pressed) in this state, by the program element searcher 4, the program elements including the contact point number "0111" are searched from the entire project, and the list of program elements is obtained as the search result.

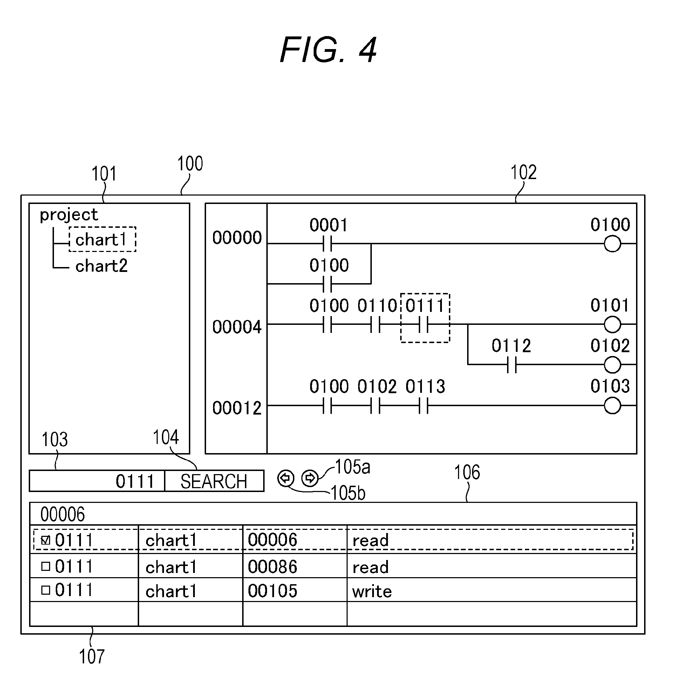

Fig. 4 is the diagram illustrating that the search button 104 is selected, and the search result is displayed in the search result display area 107. Here, three program elements including the contact point number "0111" are found out. The obtained search result is stored in the search result storage 5, and further is displayed in the search result display area 107 by the search result displayer 6. In the search result display area 107, on the respective program element, the following are displayed from the left in the row direction: the contact point number of the variable having been the search target, the ladder chart name where the program element is included, the instruction number of the program element having been found out, and a distinction between read or write of the variable having been the search target. Further, the program elements are displayed arranged in the column direction. Additionally, here, the representative program element being the reading target of the variable is the contact point, and the representative program element being the writing target of the variable is the coil.

Furthermore, here, the program element selected so as to specify the variable having been the search target is the contact point with the instruction number "00006." In the search by the program element searcher 4, the selected program element is also obviously found out because the program element includes the variable having been the search target. In the search result display area 107, the program element having been the search source is highlighted by the highlight or a similar highlighting (in Fig. 4, the surrounding by the dashed line indicates the highlighting). Accordingly, the program element having been the search source can be easily identified from the inside of the list of the search result. Furthermore, in the search result display area 107, other than the program element having been the search source, it is indicated that the program element which is the reading target of the variable "0111" is found out at the instruction number "00086" and the program element which is the writing target of the variable "0111" is found out at the instruction number "00105."

In the left side of the contact point number of the variable having been the search target in the search result display area 107, check boxes are arranged. The check box indicates whether or not the program element where the check box is arranged has been displayed in the ladder chart display area 102 by the ladder chart displayer 2. The checkbox is set so as to be checked when the program element is already displayed. The presence or absence of this display (whether or not the program element has been displayed) is stored to the selection result storage 12 for each program element included in the search result. Furthermore, the presence or absence of this display is displayed as the presence or absence of the check in the check box by the selection result displayer 13. Here, the contact point of the instruction number "00006" having been the search source is already displayed in the ladder chart display area 102. Accordingly, the check box on this contact point is indicated as the state being checked. Additionally, the user can manually change the presence or absence of the check (the presence or absence of the selection) by the selection of the check box. This change is performed via the selection result changer 14. By this change, the presence or absence of the display stored in the selection result storage 12 is changed. Furthermore, the change result is reflected on the display screen 100 by the selection result displayer 13.

In the search history display area 106, the search history is displayed by the search history displayer 10. Here, first, because the search, where the contact point of the instruction number "00006" is the search source, has been performed, the instruction number "00006" is displayed. Further, here, the instruction number "00006" is highlighted with a bold face. This is because the search result, where the contact point of the instruction number "00006" is the search source, is currently displayed in the search result display area 107.

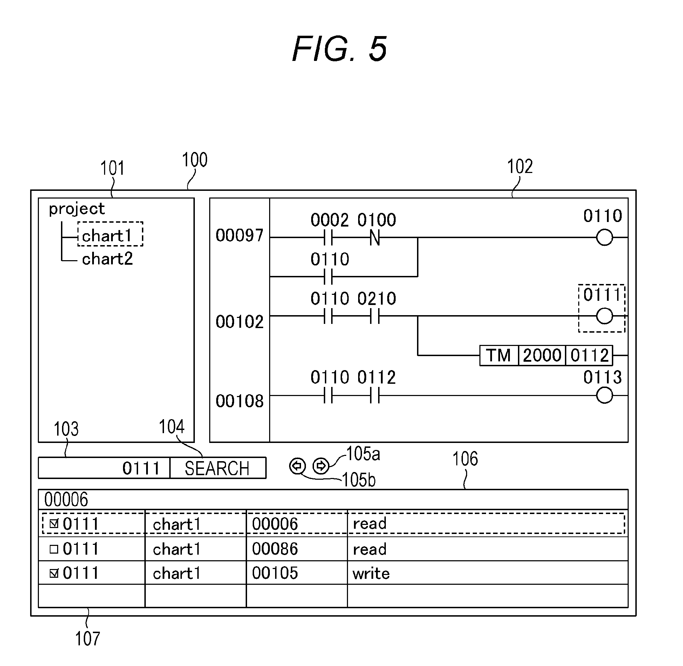

Here, furthermore, in order to trace the program element being the writing target of the variable "0111," the program element of the instruction number "00105" displayed in the search result display area 107 by the search result displayer 6 is selected. In addition, this selection is performed, for example, as follows. First, the user identifies (specifies) the program element by moving the pointer, such as the computer mouse cursor, to the instruction number "00105" in the present search result display area 107 and then clicking the instruction number "00105," or by touching the area where the instruction number "00105" is displayed when a touchscreen is employed as the input device 1e, or by a similar method. Then, the program element selector 11 selects the program element identified by the user and causes the ladder chart displayer 2 to update the ladder chart display area 102 in order that the selected program element is displayed. As a result, the screen illustrated in Fig. 5 is obtained. Here, in the ladder chart display area 102, the program row including the coil having the instruction number "00105" is displayed. Accordingly, the trace of the ladder program can be easily performed. Simultaneously, the information, which indicates that the program element selected by the program element selector 11 is displayed by the ladder chart displayer 2, is stored in the selection result storage 12. Furthermore, the check box at the left side of the program element of the instruction number "00105" is changed to the checked state by the selection result displayer 13.

Further, when the contact point of the contact point number "0210" residing in the same row, which affects the state of the coil having the instruction number "00105," is further traced, in the same way before, the user selects the contact point in the ladder chart display area 102 and presses the search button 104.

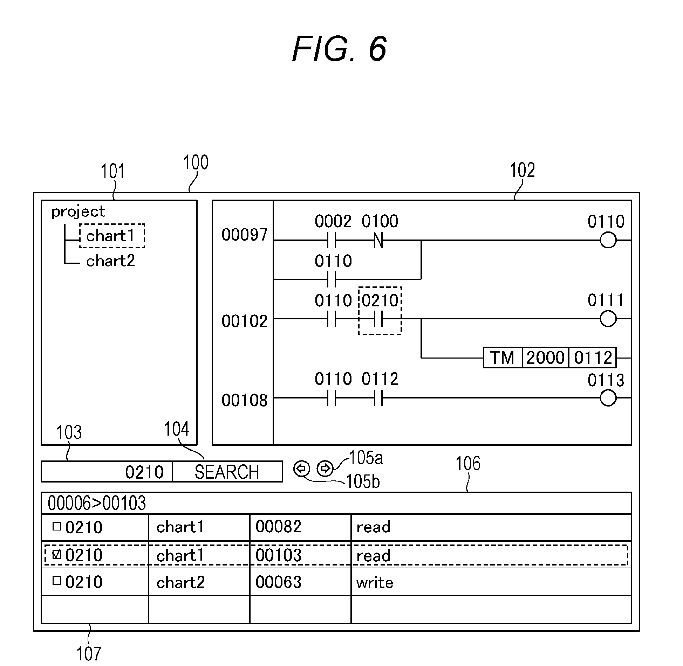

As a result, Fig. 6 is obtained. Here, in the ladder chart display area 102, the contact point of the instruction number "00103" having the variable of the contact point number "0210" is highlighted. Furthermore, in the search result display area 107, the list of the program elements having the variable of the contact point number "0210" is displayed as the search result. The contact point of the instruction number "00103" is highlighted, and the check box is checked. Furthermore, in the search history display area 106, the search history, here, the instruction number of the program element having been the search source is displayed in the format of, so-called, a breadcrumb trail. That is, the search history is displayed in the way that the search histories are arranged in series from the left toward the right in the order from the older search histories sandwiching an appropriate sign (in this example, ">"). The instruction number "00103" that indicates the current search is highlighted.

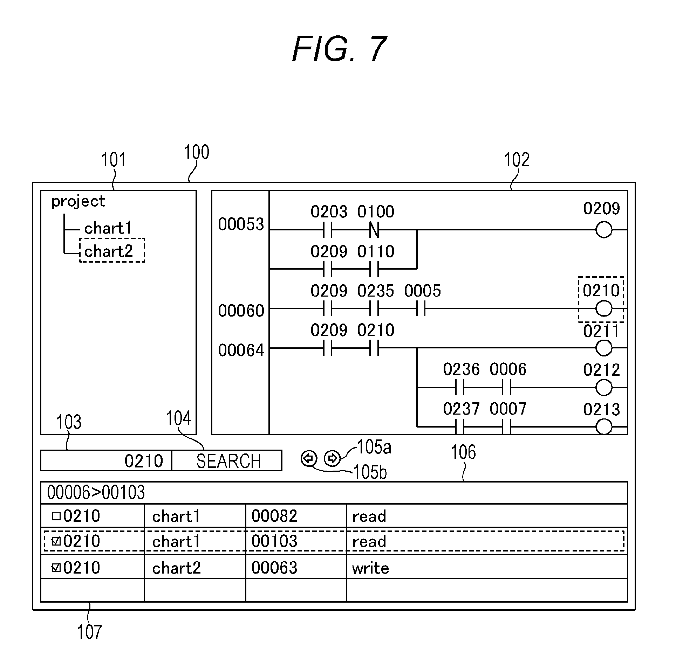

Furthermore, here, Fig. 7 is the screen when, in order to trace the program element being the writing target of the variable "0210," the program element of the instruction number "00063" displayed in the search result display area 107 by the search result displayer 6 is selected. Here, the coil of the instruction number "00063" having the variable "0210" is the program element included in the ladder chart "chart 2." Thus, in the ladder chart display area 102, the row including the coil of the instruction number "00063" in the ladder chart "chart 2" is displayed, and the coil of the instruction number "00063" is highlighted. Furthermore, in the project information display area 101, the ladder chart "chart 2" currently being displayed is highlighted. Additionally, the check box of the program element of the instruction number "00063" in the search result display area 107 is checked.

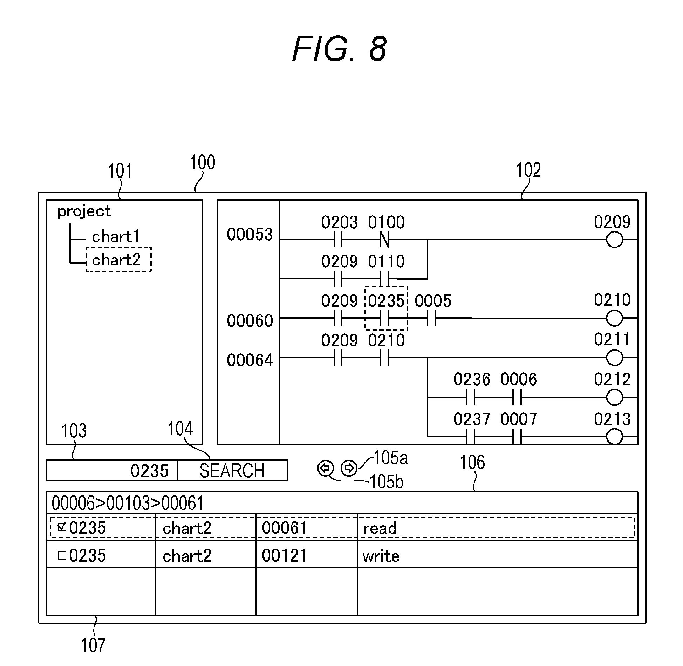

With a similar procedure, further, the trace on the contact point of the contact point number "0235" is performed. In this case, when the user selects the contact point (highlighted) and press the search button 104, as illustrated in Fig. 8, the search result is displayed in the search result display area 107, and the check box of the program element of the instruction number "00061" is checked. In the search history display area 106, further, the instruction number "00061" having been the search source is added and highlighted.

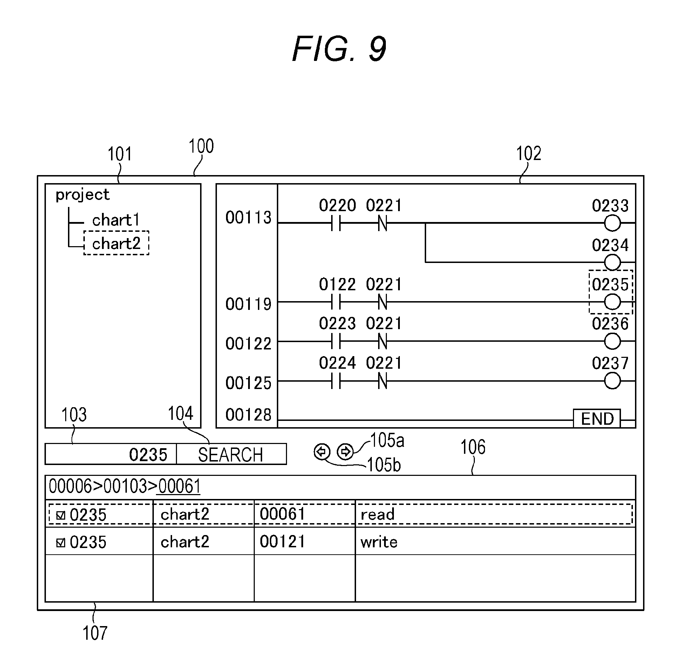

In this state, when the program element being the writing target of the variable of the contact point number "0235" is selected, the ladder chart display area 102 becomes the state as illustrated in Fig. 9. As illustrated in Fig. 9, in the ladder chart display area 102, the row including the coil of the instruction number "00121" is displayed. Furthermore, the check box of the program element of the instruction number "00121" in the search result display area 107 is checked. In this case, in the example of Fig. 9, the variable "0122" is used as the contact point number of the contact point of the instruction number "00119." When the user can find out that this number is an error, the user corrects the error.

In the example of Fig. 9, all the program elements included in the search result relating to the instruction number "00061" is displayed in the ladder chart display area 102 by the ladder chart displayer 2 (that is, all the check boxes in the search result display area 107 are in the state of being checked). The search history displayer 10 may display this search by distinguishing from other searches. In this embodiment, as indicated in Fig. 9, the search history displayer 10 underlines "00061." Other than this, for example, the search history displayer 10 may change the display color of "00061" such as being grayed out. Thus, the search where the search and trace are already completed can be immediately distinguished. Accordingly, the occurrence of redundant work by referring the same search repeatedly can be suppressed. As a result, debugging and inspection of the ladder program can be efficiently performed.

As described above, debugging of the ladder chart may be completed by simply repeating the search and trace. However, according to knowledge of the inventors, it is often difficult to immediately identify errors, and thus the search and trace may be repeated to search the errors. Therefore, in this embodiment, the advance button 105a, the retreat button 105b, and the search history display area 106 are prepared. Thus, by the search result selector 7, the search result to be displayed next by the search result displayer 6 can be easily selected. Accordingly, because the user can quickly browse the desired search result, the search and trace of the ladder program can be quickly and effectively performed.

The operation when the advance button 105a or the retreat button 105b is pressed is executed by the display advance/retreat selector 8 of the search result selector 7. The operation of the display advance/retreat selector 8 is that, corresponding to the operation of the advance button 105a or the retreat button 105b, the displays in the ladder chart display area 102 and search result display area 107 are advanced or retreated.

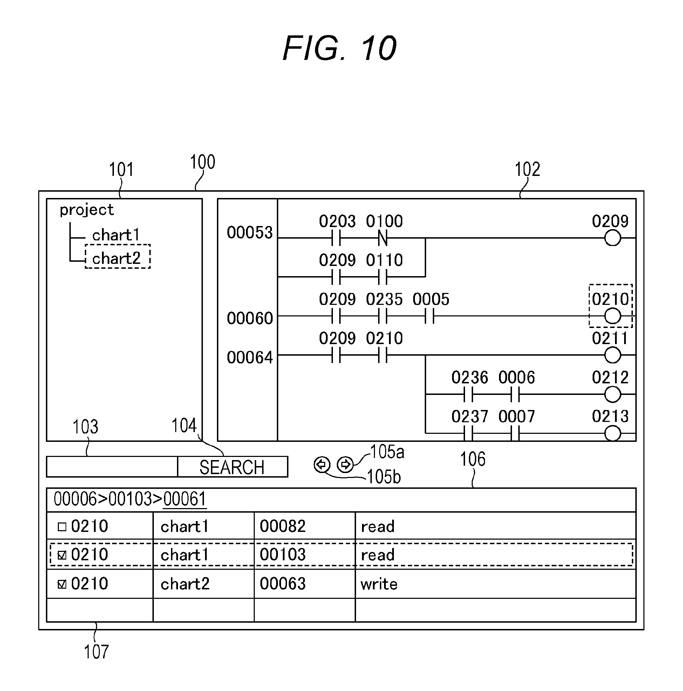

Fig. 10 illustrates the example of the screen when, in the state in Fig. 9, the retreat button 105b is pressed. First, the display advance/retreat selector 8 refers to the search result storage 5. When one previous search result is present, the display advance/retreat selector 8 causes the search result displayer 6 to display the one previous search result, here, the search result relating to contact point number "0210." Furthermore, the display advance/retreat selector 8 causes the ladder chart displayer 2 to display one previous display screen. The method to identify the one previous display screen is not specifically limited. This method includes, for example, among the recorded search in the search history, the use of the position of the program element (the selected program element for this search) being the search source when the retreat button 105b is pressed. Here, this position is the position of the row including the contact point of the instruction number "00061."

At this time, in the search history display area 106, the search history is displayed in the format of the breadcrumb trail by the search history displayer 10. The display includes both of the searches: the search (here, the search relating to "00006") performed before the search (here, the search relating to "00103") of which the search result is displayed by the search result displayer 6, and the search (here, the search relating to "00061") performed after the search (here, the search relating to "00103"). Thus, the user can easily find out the presence of the search performed after the currently referring search. Furthermore, by the direct selector 9 described later, either search result can be immediately displayed.

When the advance button 105a or the retreat button 105b is pressed as described above, the display advance/retreat selector 8 advances or retreats both displays of the ladder chart display area 102 and the search result display area 107 where the search result can be advanced or retreated. On the other hand, when the advance button 105a or the retreat button 105b is pressed, and the search result cannot be advanced or retreated, the display advance/retreat selector 8 advances or retreats the display in the ladder chart display area 102. When the display in the ladder chart display area 102 cannot be advanced or retreated, the display advance/retreat selector 8 does not perform anything (or, the display advance/retreat selector 8 causes the advance button 105a and the retreat button 105b to be disabled or inoperable).

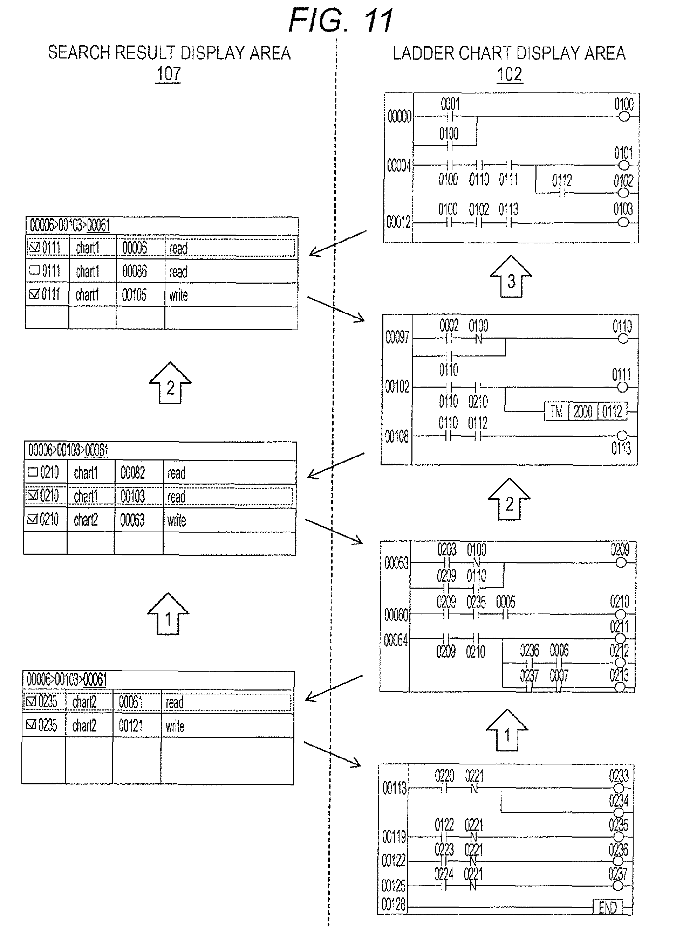

The operation of the display advance/retreat selector 8 will be described in detail with the use of Fig. 11. Fig. 11 is the diagram illustrating a transition of the ladder chart display area 102 and the search result display area 107 in the display screen 100 illustrated in Fig. 3 to Fig. 9.

The transition of the ladder chart display area 102 and the search result display area 107 illustrated in Fig. 3 to Fig. 9 is indicated by solid arrows in Fig. 11. From the upper part toward the lower part in Fig. 11, the ladder chart display area 102 and the search result display area 107 are alternately updated. In the phase of Fig. 9, the ladder chart display area 102 and the search result display area 107 are in the state indicated at the bottom in Fig. 11.

Here, when the retreat button 105b is pressed, the display advance/retreat selector 8, as indicated by the white arrow displayed as "1," one step retreats both displays of the ladder chart display area 102 and the search result display area 107. When the retreat button 105b is further pressed, the display advance/retreat selector 8, as indicated by the white arrow displayed as "2," further one step retreats both displays of the ladder chart display area 102 and the search result display area 107. When the retreat button 105b is continuously pressed, because a destination to retreat of the display of the search result display area 107 does not exist, the display advance/retreat selector 8, as indicated by the white arrow displayed as "3," one step retreats the display of the ladder chart display area 102.

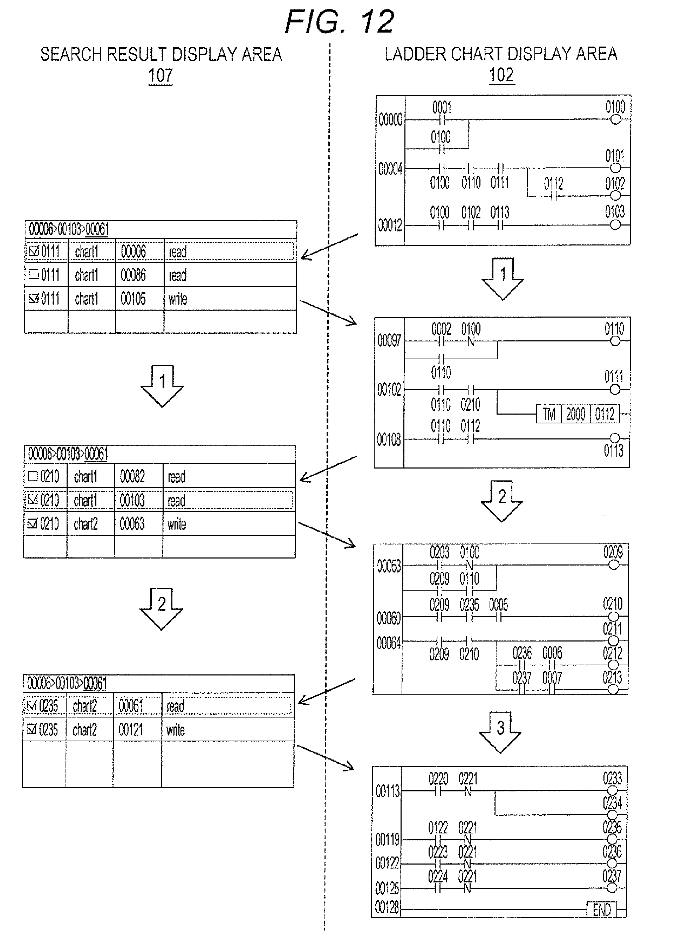

In contrast to this, the transition of the ladder chart display area 102 and the search result display area 107 when the advance button 105a is pressed is illustrated in Fig. 12. That is, assume that the current state of the ladder chart display area 102 and the search result display area 107 in the display screen 100 is the state indicated at the top of Fig. 12. In this case, when the advance button 105a is pressed, the display advance/retreat selector 8, as indicated by the white arrow displayed as "1," one step advances both displays of the ladder chart display area 102 and the search result display area 107. When the advance button 105a is further pressed, the display advance/retreat selector 8, as indicated by the white arrow displayed as "2," one step ahead advances both displays of the ladder chart display area 102 and the search result display area 107. When the advance button 105a is continuously pressed, because a destination to advance of the display of the search result display area 107 does not exist, the display advance/retreat selector 8, as indicated by the white arrow displayed as "3," one step advances the display of the ladder chart display area 102.

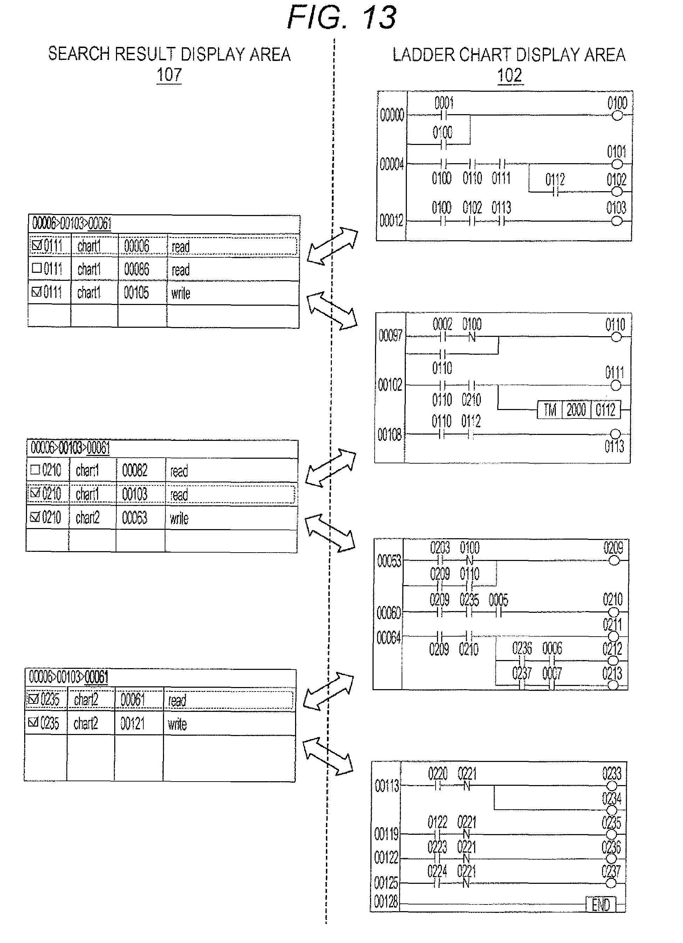

Alternatively, as indicated by the white arrow in Fig. 13, when the advance button 105a or the retreat button 105b is pressed, the display advance/retreat selector 8 may be configured to alternately advance or retreat the displays of the ladder chart display area 102 and the search result display area 107. The operation of the display advance/retreat selector 8 may be the operation described with the use of Fig. 11 and Fig. 12 or the operation described with the use of Fig. 13. Furthermore, the display advance/retreat selector 8 may be configured for the user to select either of these two operations. In the operation described with the use of Fig. 11 and Fig. 12, the display screen 100 can be quickly switched. On the other hand, in the operation described with the use of Fig. 13, the user can closely select the screen that the user wants to display.

Thus, by the switching of not only the display of the search result display area 107 but also the display of the ladder chart display area 102, the search and trace of the ladder program can be quickly and effectively performed. Additionally, in the search result display area 107, it is indicated by the check in the check box of the program element that the program element has been referenced. Thus, the occurrence of the redundant work by the same program element being repeatedly referenced can be suppressed. As a result, the debugging and inspection of the ladder program can be efficiently performed. Further, the check box is configured in order that the presence or absence of the check can be changed. In view of this, for the part (program element) where the display (confirmation) is clearly unnecessary, the user can eliminate a useless labor (unnecessary reconfirmation) by checking the check box manually. On the other hand, for the part (program element) where reconfirmation is necessary, the user can suppress incomplete confirmation by unchecking the check box manually. Thus, in this embodiment, the display state of the search result display area 107 can be flexibly operated. This contributes to the efficient debug operation.

Subsequently, the operation of the direct selector 9 will be described. Corresponding to the search history displayed in the search history display area 106 being selected, for example, by the user, the direct selector 9 causes the search result by the search to be displayed in the search result display area 107 by the search result displayer 6. Thus, when the search result that the user wants to browse is clear, the user can immediately cause the search result to be displayed. At this time, in this embodiment, the update of the ladder chart display area 102 by the ladder chart displayer 2 is not performed. However, the ladder chart displayer 2 may cause the ladder chart, which matches the search result, for example, the row that includes the program element having been the search source, to be displayed in the ladder chart display area 102.

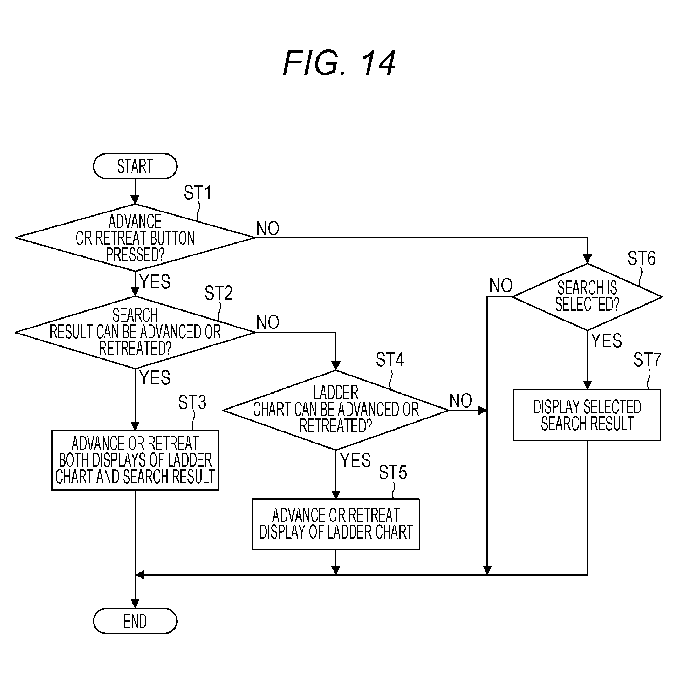

Fig. 14 is a flowchart illustrating the operation by the search result selector 7.

The search result selector 7, first, at Step ST1, determines whether or not the advance button 105a or the retreat button 105b is pressed. When the advance button 105a or the retreat button 105b is pressed, the process proceeds to Step ST2, and otherwise the process proceeds to Step ST6. In addition, the steps from Step ST2 to Step ST5 are the operation by the display advance/retreat selector 8. Step ST6 and Step ST7 are the operation by the direct selector 9.

At Step ST2, when the advance button 105a is pressed, the display advance/retreat selector 8 determines whether or not the currently displayed search result can be advanced. On the other hand, when the retreat button 105b is pressed, the display advance/retreat selector 8 determines whether or not the currently displayed search result can be retreated. When the currently displayed search result can be advanced or retreated, the display advance/retreat selector 8 proceeds to Step ST3, and otherwise proceeds to Step ST4.

At Step ST3, the display advance/retreat selector 8 causes the display of the ladder chart to be advanced or retreated by the ladder chart displayer 2. Furthermore, the display advance/retreat selector 8 causes the display of the search result to be advanced or retreated by the search result displayer 6. When the display is updated, the display advance/retreat selector 8 terminates the operation.

Meanwhile, at Step ST4, when the advance button 105a is pressed, the display advance/retreat selector 8 determines whether or not the currently displayed ladder chart can be advanced. On the other hand, when the retreat button 105b is pressed, the display advance/retreat selector 8 determines whether or not the currently displayed ladder chart can be retreated. When the currently displayed ladder chart can be advanced or retreated, the display advance/retreat selector 8 proceeds to Step ST5, and the display of the ladder chart is advanced or retreated by the ladder chart displayer 2.

At Step ST4, when the display advance/retreat selector 8 determines that the display of the ladder chart cannot be advanced or retreated and ends the process of Step ST5, the display advance/retreat selector 8 terminates the operation.

At Step ST1, when the advance button 105a or the retreat button 105b is not pressed, the direct selector 9 proceeds to Step ST6 and determines whether or not any of the searches displayed in the search history display area 106 is selected. When any of the searches displayed in the search history display area 106 is selected, the direct selector 9 proceeds to Step ST7 and otherwise terminates the process.

At Step ST7, the direct selector 9 causes the search result displayer 6 to display the search result that corresponds to the selected search. When the search result is stored in the search result storage 5, the search result displayer 6 reads and displays the search result. On the other hand, when simply the search history is selectively stored in the search result storage 5, the search result displayer 6 may display the search result obtained by the performance of the re-search with the use of the storage.

Incidentally, in the aforementioned description, the program element searcher 4 searches all program elements including the variable being search target from inside the ladder program. The program element searcher 4 may be configured to be able to set a predetermined condition relating to this search. According to knowledge of the inventors, especially in debugging of the ladder program, in many cases, the program element such as coil that influences the state of the variable is traced. Accordingly, from the view point of debug efficiency, the program element searcher 4 is preferred to be configured to be able to selectively search the program element being the writing target of the variable being the search target. In order to perform this search, it is preferred that the user can suitably set the condition when the search is performed by the program element searcher 4, and the search is performed after the condition is set in order that the program element to be the writing target of the variable is selectively searched. Alternatively, a button for selectively searching the program element to be the writing target of the variable may be additionally arranged other than the search button 104. In this case, when the user presses the button, the aforementioned selective search is executed. Furthermore, the program element searcher 4 may be configured to be able to selectively search the program element to be the reading target of the variable being the search target.

Additionally, the ladder chart displayer 2 is one example of a ladder chart display unit, and the variable specifier 3 is one example of a variable specification unit. The program element searcher 4 is one example of a program element search unit, and the search result storage 5 is one example of a search result storage unit. The search result displayer 6 is one example of a search result display unit, and the search result selector 7 is one example of a search result selection unit. The display advance/retreat selector 8 is one example of a display advance/retreat selection unit, and search history displayer 10 is one example of a search history display unit. The program element selector 11 is one example of a program element selection unit, and the selection result storage 12 is one example of a selection result storage unit. The selection result displayer 13 is one example of a selection result display unit, and the selection result changer 14 is one example of a selection result change unit.

The embodiment of this disclosure has been described above. The specific configuration indicated in this embodiment is shown as one example, and the technical range of this description is not intended to limit to this. Those skilled in the art may appropriately modify the embodiment disclosed in this description, and should understand that those modifications are included in the technical range disclosed in this description.

Further, the ladder program generating device according to the embodiment of this disclosure may be the following first to fourteenth ladder program generating devices.

A first ladder program generating device includes a ladder chart displayer, a variable specifier, a program element searcher, a search result displayer, a search result storage, and a search result selector. The ladder chart displayer displays a ladder chart including a plurality of program elements. The variable specifier identifies one program element included in the ladder chart and specifies a variable included in the one program element. The program element searcher searches the program element in which the variable specified by the variable specifier is present in the ladder chart. The search result displayer displays a list of the program elements searched by the program element searcher as search result. The search result storage at least stores a search history by the program element searcher. The search result selector can select the search result to be displayed next by the search result displayer based on the search history.

In a second ladder program generating device according to the first ladder program generating device, the search result displayer displays the program element identified by the variable specifier in distinction from other program element included in the search result.

In a third ladder program generating device according to the first or the second ladder program generating device, when the search result displayer displays the search result, the ladder chart displayer displays the program element identified by the variable specifier in distinction from other program element included in the search result.

The fourth ladder program generating device according to any one of the first to third ladder program generating device includes a program element selector that selects one program element included in the search result displayed by the search result displayer and causes the ladder chart displayer to display at least the one program element.

In the fifth ladder program generating device according to the fourth ladder program generating device, the search result selector includes a display advance/retreat selector configured to select advance or retreat of at least any one display of the ladder chart displayer and search result displayer based on the search history.

In the sixth ladder program generating device according to the fifth ladder program generating device, the display advance/retreat selector advances or retreats the display by the ladder chart displayer and the search result displayer when the search result can be advanced or retreated, and advances or retreats the display by the ladder chart displayer when the search result cannot be advanced or retreated.

In the seventh ladder program generating device according to the fifth ladder program generating device, the display advance/retreat selector alternately advances or retreats the display by the ladder chart displayer and the search result displayer.

The eighth ladder program generating device, in any one of the first to seventh ladder program generating device, includes: a selection result storage configured to store the selection result of presence or absence of the selection by the program element selector for each program element included in the search result; a selection history displayer configured to display the selection result by associating with the program element included in the search result; and a selection result changer configured to change the selection result to being not selected.

In the ninth ladder program generating device according to the eighth ladder program generating device, the selection result changer can further change the selection result to being selected.

In the tenth ladder program generating device according to any one of the first to ninth ladder program generating device, a search history displayer configured to display a list of the search included in the search history is further included, and the search result selector can select the search result by selecting one search from the searches displayed in the list.

In the eleventh ladder program generating device according to the tenth ladder program generating device, among the searches displayed in the list, the search history displayer displays the search, where all of program elements included in the search result obtained by the search is displayed in the ladder chart displayer, by distinguishing from other searches.

In the twelfth ladder program generating device according to the tenth or eleventh ladder program generating device, the search history displayer is configured to display the search history including the search that is searched before the search result being displayed by the search result displayer and the search that is searched after the search result being displayed.

In the thirteenth ladder program generating device according to the tenth to twelfth ladder program generating device, the search history displayer displays the search included in the search history by the program element searcher as a breadcrumb trail.

In the fourteenth ladder program generating device according to any one of the first to thirteenth ladder program generating device, the program element searcher can search only the program element written into the variable as the search target included in the ladder chart.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A ladder program generating device (1), **characterized by**:
a ladder chart display unit (2) configured to display a ladder chart including a plurality of program elements;
a variable specification unit (3) configured to identify one program element included in the ladder chart and specify a variable included in the one program element;
a program element search unit (4) configured to search the program element including the variable specified by the variable specification unit (3) inside the ladder chart;
a search result display unit (6) configured to display a list of program elements searched by the program element search unit (4) as a search result;
a search result storage unit (5) configured to at least store a search history by the program element search unit (4); and
a search result selection unit (7) configured to select the search result to be displayed next by the search result display unit (6) based on the search history.

2. The ladder program generating device (1) according to claim 1, wherein
the search result display unit (6) displays the program element identified by the variable specification unit (3) by distinguishing from another program element included in the search result.

3. The ladder program generating device (1) according to claim 1 or 2, wherein
when the search result display unit (6) displays a search result, the ladder chart display unit (2) displays the program element identified by the variable specification unit (3) by distinguishing from another program element included in the search result.

4. The ladder program generating device (1) according to any one of claims 1 to 3, further comprising
a program element selection unit (11) configured to select one program element included in the search result displayed by the search result display unit (6) and cause the ladder chart display unit (2) to display at least the one program element.

5. The ladder program generating device (1) according to claim 4, wherein
the search result selection unit (7) includes a display advance/retreat selection unit (8) configured to advance or retreat a display at least any one of the ladder chart display unit (2) and the search result display unit (6) based on the search history.

6. The ladder program generating device (1) according to claim 5, wherein
when the search result can be advanced or retreated, the display advance/retreat selection unit (8) advances or retreats the display by the ladder chart display unit (2) and the search result display unit (6), and
when the search result cannot be advanced or retreated, the display advance/retreat selection unit (8) advances or retreats the display by the ladder chart display unit (2).

7. The ladder program generating device (1) according to claim 5, wherein
the display advance/retreat selection unit (8) alternately advances or retreats the display by the ladder chart display unit (2) and the search result display unit (6).

8. The ladder program generating device (1) according to any one of claims 4 to 7, further comprising:
a selection result storage unit (12) configured to store a selection result as presence or absence of a selection by the program element selection unit (11) for each of the program elements included in the search result;
a selection result display unit (13) configured to display the selection result associating with the program elements included in the search result; and
a selection result change unit (14) configured to change the selection result.

9. The ladder program generating device (1) according to claim 8, wherein
the selection result change unit (14) has a function to change the selection result from being selected to not being selected, and from not being selected to being selected.

10. The ladder program generating device (1) according to any one of claims 1 to 9, further comprising
a search history display unit (10) configured to display a list of searches included in the search history, wherein
the search result selection unit (7) is configured to select the search result by one search selected from the listed searches as the search result to be displayed next by the search result display unit (6).

11. The ladder program generating device (1) according to claim 10, wherein
the search history display unit (10), among the listed searches, displays the search where all of the program elements included in the search result obtained by the search are displayed by the ladder chart display unit (2) by distinguishing from another search.

12. The ladder program generating device (1) according to claim 10 or 11, wherein
the search history display unit (10) is configured to display the search history including the search performed before the search result displayed by the search result display unit (6) and the search performed after the displayed search result.

13. The ladder program generating device (1) according to any one of claims 10 to 12, wherein
the search history display unit (10) displays the search included in the search history by the program element search unit (4) as a breadcrumb trail.

14. The ladder program generating device (1) according to any one of claims 1 to 13, wherein
the program element search unit (4) is configured to selectively search a program element to be a writing target of a variable as a search target included in the ladder chart.

15. A computer program causing a computer to function as a ladder program generating device (1), the ladder program generating device (1) **characterized by**:
a ladder chart display unit (2) configured to display a ladder chart including a plurality of program elements;
a variable specification unit (3) configured to identify one program element included in the ladder chart and specify a variable included in the one program element;
a program element search unit (4) configured to search the program element including the variable specified by the variable specification unit (3) inside the ladder chart;
a search result display unit (6) configured to display a list of program elements searched by the program element search unit (4) as a search result;
a search result storage unit (5) configured to at least store a search history by the program element search unit (4); and
a search result selection unit (7) configured to select the search result to be displayed next by the search result display unit (6) based on the search history.

16. A computer-readable information recording medium in which the computer program according to claim 15 is recorded.
